# EUROPEAN PATENT APPLICATION

(11) **EP 4 725 635 A1**
(43) Date of publication of application: **15.04.2026**
(21) Application number: 24205200.9
(22) Date of filing: 08.10.2024
(51) Int. Cl.: B23K 20/12

(54) **METHODS AND APPARATUS FOR FRICTION WELDING**

(71) Applicant: Helmholtz-Zentrum hereon GmbH, 21502 Geesthacht (DE)
(72) Inventor: Roos, Arne, 21035 Hamburg (DE); Bernardi, Matteo, 21502 Geesthacht (DE); Klusemann, Benjamin, 21502 Geesthacht (DE)
(74) Representative: Bird & Bird LLP - Hamburg

(57) **Abstract**

Disclosed is a method and apparatus for friction welding. This comprises inserting a first plug member (12) through an aperture (18) in a workpiece (16), the first plug member (12) comprising a main body (20), a plug (22) and a transition section (26) located between the plug and the main body (20), and a first axis (24), applying a first axial force to the first plug member (12) such that the plug (22) thereof is brought into contact with a first surface of the workpiece (16), locating a second plug member (14) comprising a second axis relative to the first plug member (12) and applying a second axial force to the second plug member (14) to bring the second plug member (14) into contact the workpiece (16) and into contact with the transition section (26) of the first plug member (12), the first axial force being opposite to the second axial force, and rotating the first plug member (12) about the respective first axis to provide friction between the first plug member (12) and the workpiece (16).

## Description

Some examples relate to a method and an apparatus for friction welding, and in particular to a method and apparatus for providing friction plug weld.

In the design and construction of structures, for example thin-walled, closed structures such as tanks (fuel tanks, energy storage tanks, or the like) or adjacent flanges comprising primarily similar and dissimilar metallic and polymer-based materials, there may arise unwanted openings in said structures. There may be many reasons for such openings, such as a result of friction stir welding (FSW) in which a keyhole opening remains at the end of the FSW process, or as the result of another manufacturing process that requires or is facilitated by the presence of an opening in the material. It is therefore desirable to close said openings.

Said openings may be closed by a welding process. Several such processes for closing openings are already known. For example, laser beam welding (LBW) or single-sided friction welding of a plug may be used to weld a plug into an opening so as to close said opening.

In the case of LBW, a complex level of process control is required to the requirement for low tolerances to ensure successful welding, for example to ensure that there is no gap between the components to be joined. In addition, the high local energy input and the melting of the joining partners in LBW leads to both softening in the weld area and the known metallurgical defects that are common in the transition from solid to liquid and back to solid e.g. pores, hot cracks, coarse grain formation, etc.. In addition, some materials, e.g. aluminium-lithium alloys or dissimilar material combinations cannot be joined by LBW, at least without an extremely large technical effort.

In the case of single-sided friction welding of a plug, this is only possible where larger wall thicknesses are present, and where the joint is primarily loaded from one side (e.g. the pressurised side of the structure to be sealed, in the case of a pressure vessel). This type of weld may therefore be appropriate for quasi-static loads, or short-term dynamic loads. However, where longer-term dynamic loads (e.g. cyclic loads) are present, or where bending and torque act on the connection (e.g. in the case of a storage tank in an aircraft), single-sided friction welding may not be appropriate.

There is therefore a need for a method and apparatus that enables openings in structures, such as thin-walled structures, to be closed, that can be done in a straightforward and relatively inexpensive manner, but that provides a high-quality and reliable closure to an opening.

An aspect of the present disclosure relates to a method of friction welding. The method may be a method of friction plug welding. The method comprises inserting a first plug member through an aperture in a workpiece, the first plug member comprising a main body, a plug and a transition section located between the plug and the main body, and a first axis. The method comprises applying a first axial force to the first plug member, preferably prior or after initiating rotational speed to one or both plug members, such that the plug thereof is brought into contact with a first surface of the workpiece, and locating a second plug member comprising a second axis relative to the first plug member and applying a second axial force to the second plug member to bring the second plug member into contact with the workpiece and into contact with the transition section of the first plug member, the first axial force being opposite to the second axial force. The method further comprises rotating at least the first plug member about the first axis to provide friction between the first plug member and the workpiece.

In use, the method may be used to provide a high-quality and reliable weld between the first plug member and the workpiece via a friction weld. Preferably, a weld is provided between both the first and second plug members and the first plug member and the workpiece via a friction weld. In addition, a weld may preferably be provided between second plug member and the workpiece via a friction weld.

This means that the described components are welded (e.g. joined) together in the solid phase, thereby excluding the disadvantages associated with a solid-liquid-solid transition as is present in known plug welding methods, while enabling the formation of a plug in thin-walled structures. In addition, very little preparation (e.g. surface treatment) is required in order to execute the method. In some cases, the method may comprise degreasing the surface or surfaces to be joined (e.g. friction welded) but there are no protective gases required, no shielding (e.g. against UV radiation) no extraction of toxic gases necessary. Since the process is mechanical, it is also easy to operate, and is energy efficient. The parts required are also simple, and therefore may be modified (e.g. machined) to fit desired geometries easily.

Further, compared to the prior art the method of the present invention provides for a symmetrical joint which has improved long-term fatigue properties in the region of the workpiece around the position of the plug members which is particularly relevant for aircraft structures where the workpiece is formed of two components joined together by a weld created by friction stir welding with the plug members closing the end hole. Moreover, the method of the present invention may result in the reduction of axial and radial stress/deformation as well as reduced torque input when counter rotating first and second plug member in thin-walled structures.

The method may comprise locating the main body of the first plug member in a recess of the second plug member such that the first and second axes of the respective first and second plug members are aligned. The method may comprise rotating one of the first plug member and the second plug member around the respective first or second axes. The method may comprise rotating both the first and second plug members about the respective first and second axes.

The method may comprise rotating the first plug member in an opposite direction to the second plug member. Rotation of the first and second plug members in opposite directions may increase the friction produced during the friction welding process, or may enable the friction welding process to be completed at a lower rotation rate. The method may comprise rotating the first plug member in the same direction to the second plug member.

The method may comprise rotating the first and/or the second plug member prior to contact with the workpiece.

The main body may be in the form of a cylindrical shaft, and the second plug member may be in the form of a cylindrical sleeve. The main body may have a constant diameter along its axial length, e.g. along its entire axial length. Having a constant diameter may assist in rotating the main body relative to the plug member so as to more preferably distributed forces along the main body during rotation thereof. The cylindrical sleeve may comprise a hollow shaft therein.

The diameter of the main body may be less than an inner diameter of the cylindrical sleeve (e.g. of the hollow shaft of the cylindrical sleeve). The hollow shaft may comprise a constant diameter along the length there (e.g. along the entire length thereof). The diameter of the hollow shaft may be larger than the diameter of the main body so as to permit a gap (e.g. an air gap) to exist between the main body and the cylindrical sleeve. As such, during rotation of the first and second plug members, there may be no (or minimal) friction between the main body and the cylindrical sleeve.

The method may comprise rotating the second plug member about the second axis to provide friction between the second plug member, the first plug member and/or the workpiece. In this case, the additional heat input from the second plug member, regardless whether it is consumable or non-consumable, is extremely helpful. The rotating second plug member also positively contributes to the weld formed between the first plug member and the workpiece. For example, this reduces the heat input required between first plug member and workpiece, and so e.g. minimizing the flash of material on the weld on the inner surface of the component formed by the workpiece and the first plug member.

As such, the method may comprise creating a friction weld between the second plug member, the first plug member and/or the workpiece. The method may comprise rotating the second plug member about the second axis to provide friction at a plug contact surface of the second plug member that is in contact with the first plug member and/or the workpiece, for example the transition section of the first plug member. The method may comprise creating a friction weld between the transition section of the first plug member and the second plug member. The second plug member being friction welded to both the first plug member and the workpiece may create a gas-tight friction plug weld that is able to be loaded in both directions, and is also able to withstand torsional and shear forces, and bending moments. Further, the method may comprise gradually increasing the rotational speed of the first and/or second plug member to increase the friction produced. In this way, the user may be able to vary the characteristics of the produced friction weld.

The method may comprise creating a friction weld between the transition section of the first plug member and the workpiece. In this case, the geometry of the aperture in the workpiece may be similar to the geometry of the transition section. For example, the method may comprise countersinking the aperture on one side thereof so as to provide a geometry that is similar to that of the transition section. The transition section between the plug section may take the form of a fillet (e.g. may be curved), chamfer, or another geometry such as a baud curve.

The method may comprise applying the second axial force to the second plug member to bring the second plug member into contact with a second surface of the workpiece, and the transition section of the first plug member into contact with a surface of the aperture in the workpiece. The method may comprise applying the first and second axial forces at the same time as rotating at least one of the first plug member and the second plug member. The method may comprise varying the magnitude of the first axial force and/or the second axial force during the friction welding method. For example, upon initial contact between the second plug member and the workpiece, and the second plug member and the first plug member, the method may comprise providing a lower axial force and gradually increasing the first and/or second axial forces to increase the friction produced, or vice versa. In this way, the user may be able to vary the characteristics of the produced friction weld easily.

A second aspect relates to an apparatus for providing a friction weld (e.g. a friction plug weld). The apparatus of the second aspect comprises a first plug member configurable to be positioned in an aperture in a workpiece. The first plug member comprises a main body, a plug and a transition section located between the plug and the main body, and a first axis. The apparatus of the second aspect second plug member comprises a second axis, and is positionable relative to the first plug member and a workpiece so as to be in contact with the workpiece and the transition section of the first plug member. At least one of the first plug member and the second plug member is configurable to be rotated relative to a workpiece so as to produce a friction weld between the first and second plug members, and between the second plug member and the workpiece.

The main body of the first plug member may be a cylindrical shaft comprising a shaft diameter, the plug may comprise a substantially cylindrical form having a plug diameter that may be greater than the shaft diameter. The transition section may be substantially frustoconical in shape, and may comprise a minimum diameter that may be equal to the shaft diameter, and a maximum diameter that may be equal to the plug diameter.

The first plug member may be configurable to be rotated so as to produce a friction weld between the first plug member and the workpiece.

The first plug member and the second plug member may be or comprise the same material. Alternatively, the first plug member and the second plug member may be or comprise different materials. The first plug member and the second plug member may comprise the same or different materials at a contact surface therebetween. The first plug member may be or comprise a metal. The second plug member may be or comprise a metal. The plug of the first plug member may be a different material to the main body and/or transition section of the first plug member. The first plug member may be or comprise at least one of aluminium, magnesium, steel, titanium, alloys of the materials, brass, thermoplastic polymer or polymer matrix composites. The second plug member may be or comprise at least one of aluminium, magnesium, steel, titanium, alloys of the materials, brass, thermoplastic polymer or polymer matrix composites. The workpiece (e.g. the contact area of the workpiece and the second plug member and/or the first plug member) may be or comprise at least one of aluminium, magnesium, steel, titanium, alloys of the materials, brass, thermoplastic polymer or polymer matrix composites. The first plug member, the second plug member and the workpiece may be any combination of the above described materials.

Particular combinations of the first plug member, the second plug member and the workpiece (e.g. the area of the workpiece that is in contact with the first and/or second plug member) may be (in the order first plug member/ second plug member/ workpiece): aluminium/ aluminium/ aluminium; magnesium/ magnesium/ magnesium; steel/ steel/ steel; titanium/ titanium/ titanium; brass/ brass/ brass; aluminium/ steel/ aluminium; aluminium/ titanium/ aluminium; thermoplastic polymer/ thermoplastic polymer/ thermoplastic polymer; polymer matrix composites/ polymer matrix composites/ polymer matrix composites.

The second plug material may be a non-consumable material (e.g. a metallic material such as steel or titanium). The first plug member may be a non-consumable material. Alternatively, each of the first and second plug members, and the workpiece, may be consumable materials. In such examples, the materials of the first plug member, second plug member and workpiece may be (in the same order as above): thermoplastic polymer/ non-consumable material/ thermoplastic polymer; polymer matrix composites/ non-consumable material/ polymer matrix composites.

The workpiece may be the same or different material to one or both of the first and second plug members.

### BRIEF DESCRIPTION

Figures 1A and 1B are cross-sectional views showing the initial positioning of the first and second plug members relative to the workpiece;
Figures 2A and 2B are cross-sectional views showing a first embodiment of forces being applied to the first and second plug members during friction welding;
Figures 3A and 3B are cross-sectional views showing a second embodiment of forces being applied to the first and second plug members during friction welding;
Figures 4A and 4B are cross-sectional views showing the first and second plug members having been friction welded together.

### DETAILED DESCRIPTION

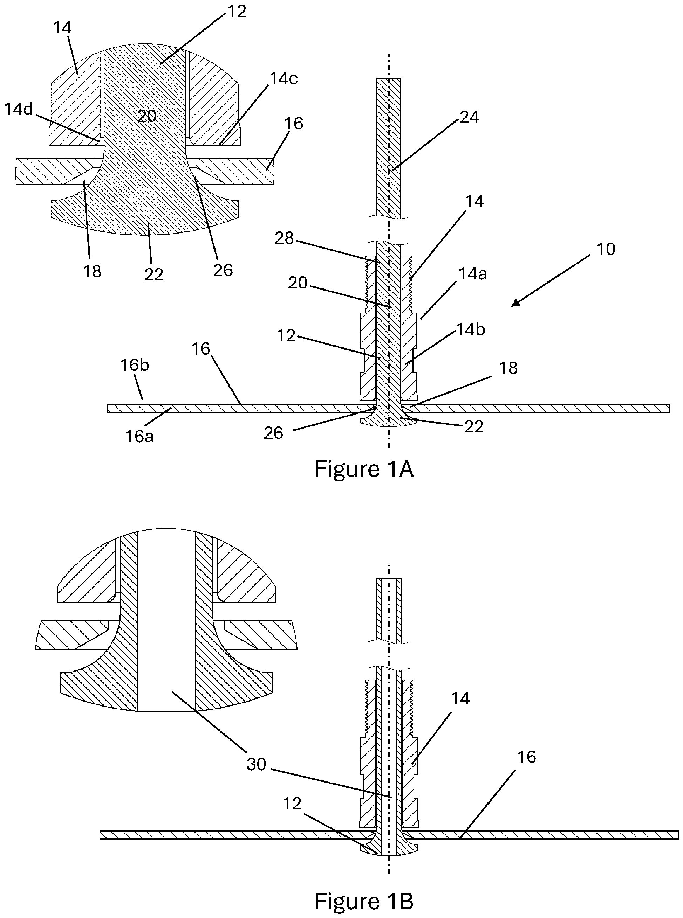

Figures 1A and 1B illustrate examples of the setup of an apparatus 10 in preparation for providing a friction weld.

Here, the apparatus 10 comprises a first plug member 12 and a second plug member 14. The first and second plug members 12, 14 are arranged relative to a workpiece 16, where the workpiece 16 comprises an aperture 18 (e.g. an opening) therein. In order to enable friction welding of the aperture 18, the first plug member 12 and the second plug member 14, the first plug member 12 is inserted into the aperture 18.

To facilitate insertion of the first plug member 12 into the aperture 18, the first plug member 12 comprises a main body portion 20, which in this example is elongate in shape and comprises a first axis 24. The elongate main body portion 20 has a substantially cylindrical shape, comprising a constant diameter in this example, and the diameter that is smaller than the diameter of the aperture 18 in the workpiece 16. In this example, the elongate main body portion 20 is positioned such that the first axis 24 is perpendicular to the workpiece 16, and in particular perpendicular to an inner surface 16a and an outer surface 16b of the workpiece 16. However, it should be noted that this may not always be the case, for example in the case where the workpiece 16 does not have a uniform shape, and/or where the workpiece 16 may be curved in sections. Here, the main body portion 20 comprises a cylindrical shape with a circumferentially extending surface that is parallel to the first axis 24. According to this example, the main body portion 20 does not comprise any threaded portion, indents or protrusions, although the skilled person will understand that this may not necessarily be the case.

To provide an effective plug for the opening 18, the first plug member 12 comprises a plug 22. In this example, the plug 22 is located at an end of the first plug member 12, and forms the end section thereof. The plug 22 illustrated in Figure 1A has a generally circular form when viewed in a direction parallel to the first axis 24, although this need not necessarily be the case, for example the plug 22 may have an oval shape or polygonal shape. The diameter, or width, of the plug is such that it is larger than the diameter of the aperture 18 in the workpiece 16, and also larger than the diameter of the main body portion 20. As such, a user is able to insert the main body 20 of the first plug member 12 into the aperture 18, and move the first plug member 12 in a direction parallel to the first axis 24 through the aperture 18 until reaching the plug 22 (or the transition section 26, as will be described). An axial force applied parallel to the first axis 24 and in the direction moving from the plug 22 to the main body portion 20 will therefore hold the first plug member 12 in place relative to the workpiece 16.

When viewed from a direction perpendicular to the first axis 24, such as is shown in Figure 1A, the end of the plug 22 that is distal to the main body portion 20 is domed in shape, which may assist to provide a smoother transition along the inner surface 16a between the plug 22 and the inner surface 16a once the friction weld has been established. However, it is also conceivable that a simpler conical shape may be used.

Located between the plug 22 and the main body portion 20 is a transition section 26. The transition section assists to provide a smooth transition in the first plug member 12 from the diameter of the plug 22 to the diameter of the main body portion 20. The transition section 26 may have a substantially frusto-conical shape, or a substantially funnel shape as in the example of Figure 1A. Here, the transition section 26 transitions in diameter from that of the plug 22 to that of the main body portion 20 via a fillet curve, so as to provide a funnel shape.

In case of a simple conical shape is used for plug 22, the transition section 26 is part of the section of the plug having an increasing cross section.

Each of the main body portion 20, plug 22 and transition section 26 are, in this example, aligned with, and rotationally symmetrical about, the first axis 24. Having each of these components of the first plug member 12 being rotationally symmetrical about the first axis 24 may facilitate rotation about the first axis 24, as will be described.

The apparatus 10 additionally comprises a second plug member 14, which is shown in this example as having the form of a cylindrical sleeve comprising a recess extending the entire length thereof. Here, it should be noted that the length of the second plug member 14 may vary and the overall shape is not necessarily such that the length is larger than the diameter. The second plug member 14 comprises an inner diameter 28, which in this example is a constant inner diameter. The outer diameter of the second plug member 14 is variable, which may assist with providing grip to the second plug member 14 of a tool, for example to enable rotation thereof. According to the present example, the second plug member 14 comprises an outer surface 14a having a threaded axial length that extends partially along the entire axial length of the second plug member 14 (in this example, around a third of the axial length of the second plug member 14) which may assist with the attachment of a tool to facilitate the rotation of the second plug member about a second axis of the second plug member 14. In the example of Figure 1A, the second axis is aligned with the first axis 14 such that both axes are coincident. It should also be noted that, while one threaded section is illustrated in the example of Figure 1A, a plurality, such as two or three, threaded sections may be present. In addition to the threaded section, the section the outer surface 14a of the second plug member 14 may comprise a protrusion or protrusions or an indent or indents. The protrusion(s) and/or indent(s) may extend fully around the circumference of the second plug member 14, or may extend partially and/or intermittently around the circumference of the second plug member 14. Such protrusions and/or indents may additionally serve to facilitate the connection of a tool to the second plug member 14 so as to restrict rotation between said tool and the plug member, and enable rotation of the second plug member 14 relative to the tool.

The second plug member 14 additionally comprises an inner surface 14b. The inner surface 14b may define a uniform diameter, as is the case in Figure 1A. the diameter defined by the inner surface 14b may be larger than the diameter of the main body portion 20 of the first plug member 12, such that there is a uniform offset (e.g. a uniform gap) between the main body portion 20 and the inner surface 14b. As illustrated in Figure 1A, there may be no contact between the main body portion 20 and the inner surface 14b during the friction welding process that will be described.

At the end of the second plug member 14 that is positioned proximal to the workpiece 16 (e.g. adjacent to the workpiece) before the friction weld is established (as illustrated in Figure 1A), the second plug member 14 comprises a workpiece contact surface 14c, and radially inwardly and adjacent to the workpiece contact surface 14c, the second plug member 14 comprises a plug contact surface 14d. In this example, the workpiece contact surface 14c is perpendicular to the second axis, while the inner surface 14b is parallel to the second axis, and the outer surface 14a is parallel or substantially parallel to the second axis. The workpiece contact surface 14c extends parallel to the surface of the workpiece 16 in the example of Figure 1A, such that (as will be described) the workpiece contact surface 14c may be moved into contact with the workpiece 16, and in particular with the outer surface 16b of the workpiece 16 in the region surrounding the aperture 18. The plug contact surface 14d is positioned on the second plug member 14 so as to come into contact with the first plug member 12 when the first and second plug members 12, 14 are moved into a position to begin friction welding. In this example, the plug contact surface 14d is positioned on an edge between the inner surface 14b and the workpiece contact surface 14c. Here, the plug contact surface 14d has been filleted, so as to have the form of an area rather than an edge. Other processes may be used with a similar effect, for example a chamfering process. Processing the contact surface 14d (e.g. by filleting the surface) may have the effect of increasing its surface area, thereby improving the quality and reliability of the friction weld.

The first plug member 12 has a greater axial length than the second plug member 14 in the described example of Figure 1A. This may enable the first plug member 12 to be handled, e.g. an axial force to be applied to the first plug member 12, for example by gripping the end of the main body portion 20 of the first plug member 12 that is opposite the plug 22. The first plug member 12 may therefore be able to be handled through the second plug member 14. In particular, in order to arrange the first and second plug members 12, 14 on a given workpiece 16 it is conceivable that the first plug member 12 is threaded into the second plug member 14, e.g. via a wire.

Also illustrated in Figure 1A is an enlarged view of the position of the first plug member 12 relative to the second plug member 14. In this enlarged view, it can be seen that the first plug member 12, the second plug member 14 and the workpiece 16 are in a position prior to the friction welding process having taken place, and there is yet no friction weld between the three components.

The aperture 18 in the workpiece 16 is also able to be seen in more detail. In this example, the aperture 18 is in the form of a countersunk opening, where the countersunk side of the aperture 16 is on the inner surface 16a of the workpiece 16, which is the same side as the plug 22 of the first plug member 12. Having the aperture 16 in the form of a countersunk opening may assist to increase the surface area of the aperture 16, for example the surface area of the aperture that is exposed to the first plug member 12 (e.g. the transition section 26 of the first plug member 12) which may thereby increase the level of friction generated during the friction welding method, and improve the quality of the friction weld.

The example of Figure 1B is similar to the example of Figure 1A, with the first plug member 12, the second plug member 14 and the workpiece 16 being illustrated in the same position as before. However, in the example of Figure 1B, the first plug member 12 comprises a hollow shaft 30 therein, which extends the entire axial length of the first plug member. According to this example, the method of friction welding may be the same as for the example of Figure 1A, but will provide a plug with an aperture therein, which may be useful in the case that access is needed through the hollow shaft 30, for example to provide internal access where the aperture 18 is located in the wall of a tank.

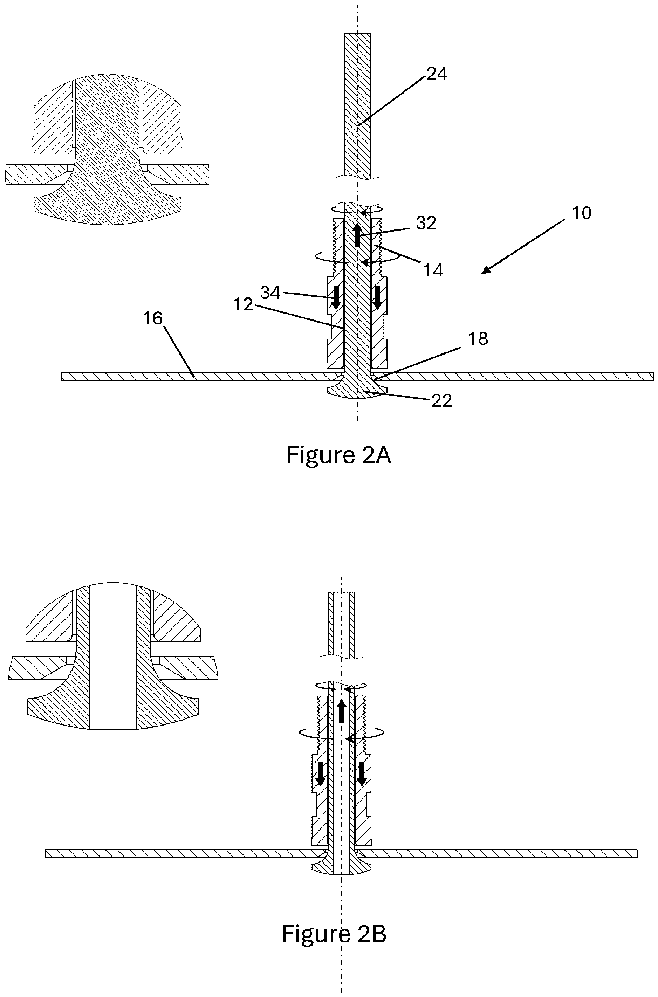

Figures 2A and 2B illustrate a further step in the friction welding method, after the first and second plug members 12, 14 have been positioned relative to the workpiece 16. Here, an axial force 32 is applied to the first plug member 12 in the direction acting away from the plug 22, such that the surface of the transition section 26 may be moved into contact with the surface of the aperture 18 (e.g. the countersunk surface of the aperture 18, and optionally a non-countersunk area of the aperture 18, which may run parallel to the first axis). Additionally, an axial force 34 is applied to the second plug member 14 in the direction of the workpiece 16 so as to bring the workpiece contact surface 14c of the second plug member 14 into contact with the workpiece 16, in particular with the area of the workpiece on the outer surface 16b that surrounds and is directly adjacent to the aperture 18 therein.

The application of the axial forces 32, 34 to the first and second plug members 12, 14 may be done at the same time as the application of a rotational force to at least one of the first and second plug members 12, 14 such that the first and second plug members are rotated in the same direction. The speed of rotation of the plug members 12, 14 may be the same, or one of the plug members 12, 14 may have a higher rotational speed than the other. In this example, a rotational force is being applied to both of the first and second plug members 12, 14 about the respective first and second axes (which in this example are coincident). As the forces are applied, the workpiece contact surface 14c of the second plug member 14 will come into contact with the workpiece, while the plug contact surface 14d will come into contact with the transition section 26. Additionally, the transition section 26 may come into contact with the aperture 18 in the workpiece, and in particular, the countersunk surface of the aperture. As the rotating second plug member 14 is brought into contact with the workpiece 16, friction will be generated between the workpiece contact surface 14c and the workpiece 16, thereby creating a friction weld. The contact between the plug contact surface 14d and the first plug member 12 also results in friction therebetween, and therefore a friction weld occurring between the first and second plug members 12, 14. As such, a friction welded plug is formed between the workpiece 16 and the first and second plug members 12, 14. Furthermore, the transition section 26 may be rotated in contact with the aperture 18, so as to create a friction weld between the first plug member 12 and the workpiece 16 at the surface of the aperture 18.

Figure 2B shows the same configuration as shown in Figure 2A, with the exception that the first plug member 12 comprises a hollow channel 30 extending axially therethrough.

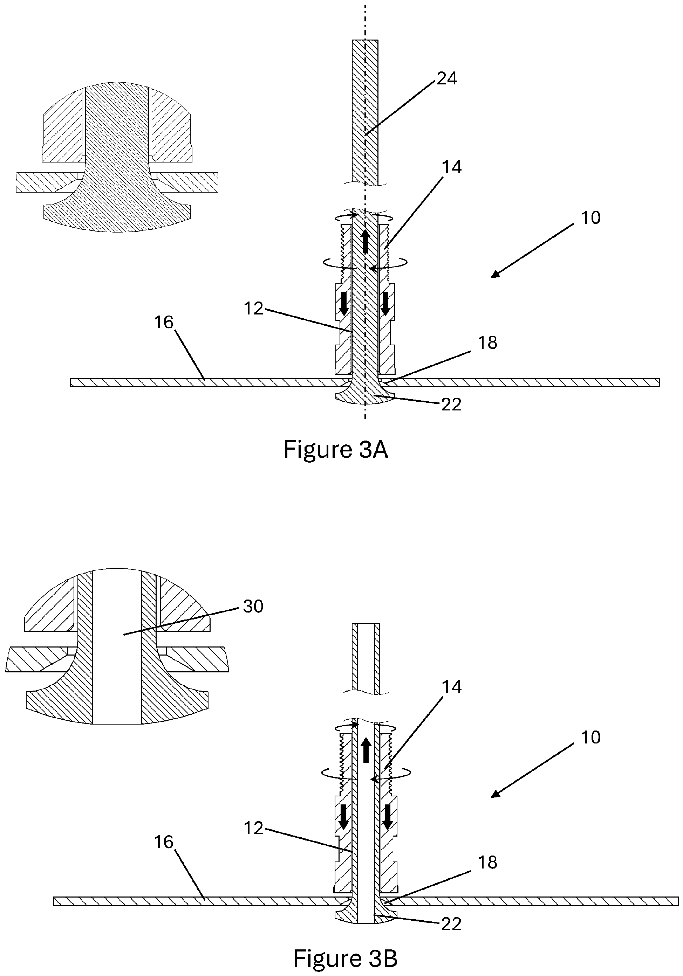

Figures 3A and 3B illustrate a second example of a method of friction welding compared to the example of Figures 2A and 2B. In the example of Figures 3A and 3B, both of the first and second plug member 12, 14 are rotated about the respective first and second axes, although in this example the first plug member 12 is rotated in the opposite direction compared to the second plug member 14.

Rotating the first and second plug members 12, 14 in the same direction (see Fig. 2A and 2B) or opposite directions (see Fig. 3A and 3B) may produce varying benefits. For example, rotating the plug members in the same direction may reduce the friction produced between the first and second plug members 12, 14 as compared to the friction between the second plug member 14 and the workpiece 16 and optionally between the first plug member 12 and the workpiece 16. Thus, characteristics of the welds may be different. This is equally true when the plug members 12, 14 are rotated in opposite directions, except that in this case, more friction may be produced between the first and second plug members 12, 14 than between the second plug member 14 and the workpiece 16. In this case, the weld produced may be particularly advantageous where it is expected that the plug will experience cyclic loading over a long time period (e.g. over a number of years).

In both cases, the speed of rotation, and the magnitude of the axial forces 32, 34 may be additional variables that may be used to increase or decrease the level of friction so as to allow a user to easily and simply vary the characteristics of the friction weld produced. In addition, the topography or structure of the surfaces in contact, i.e., the surfaces of the plug members, are an additional variable, which could be significant especially when non-consumable tool parts are involved.

In a further example, it may be possible that one of the first and second plug members 12, 14 rotates, while the other plug member 14, 12 only experiences axial loading. In such cases, a friction plug weld may still be able to be formed, but may require fewer or less complex equipment, as only one of the plug members 12, 14 may require to be rotated.

Using this described method, it is possible to produce a friction weld over an opening that is gas-tight and rigid, and which can be loaded axially in both directions without failing, as well as experience torque and bending loads without buckling. In particular, this process is useful for providing friction plug welds in thin walled structures, as the weld is able to be simply and efficiently made without the need for complex equipment, and may pose minimal risks of weld-related defects in the surrounding material.

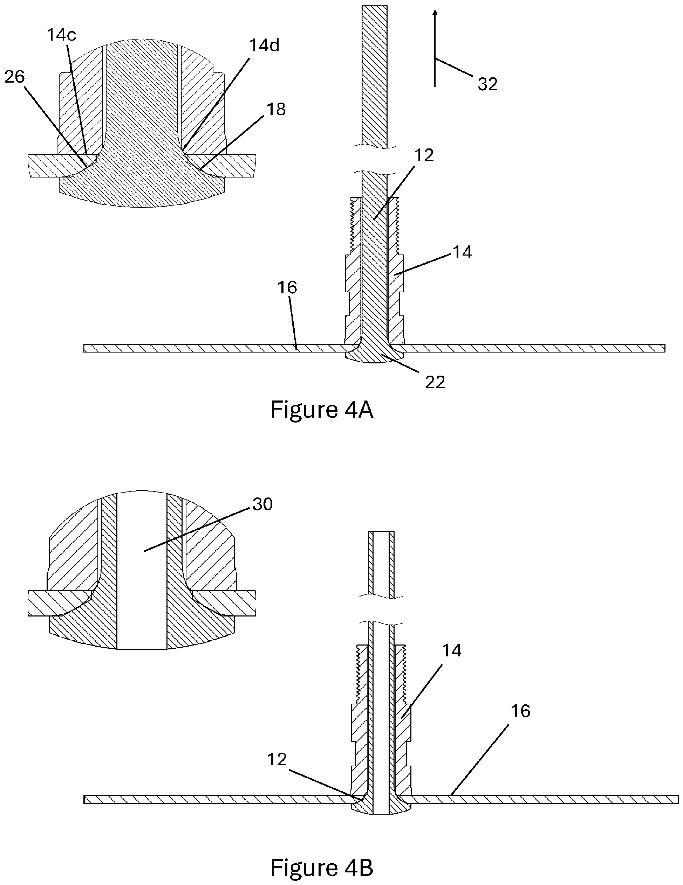

Figures 4A and 4B illustrate the first and second plug members 12, 14 having been brought into contact with the workpiece 16 and friction welded thereto to produce a friction plug weld.

In this case, both of the first and second plug members 12, 14 have been welded to the workpiece 16. Here, a friction weld is present between the transition section 26 and the surface of the aperture 18, as well as between the transition section 26 and the plug contact surface 14d and the workpiece 16 and the workpiece contact surface 14c. It should be noted that other examples may be possible in which only the first plug member 12 is welded to the workpiece 16, whereby the second plug member 14 may also be welded to the first plug member 12 at the interface between the transition section 26 and the plug contact surface 14d. Such a weld may be possible in cases where, for example, the geometry of the transition section 26 is such that the diameter thereof in the axial direction is larger than the diameter of the opening 18 having the same axial position relative to the first axis.

## Claims

1. A method of friction welding, comprising:
inserting a first plug member (12) through an aperture (18) in a workpiece (16), the first plug member (12) comprising a main body (20), a plug (22) and a transition section (26) located between the plug and the main body (20), and a first axis (24);
applying a first axial force to the first plug member (12) such that the plug (22) thereof is brought into contact with a first surface of the workpiece (16);
locating a second plug member (14) comprising a second axis relative to the first plug member (12) and applying a second axial force to the second plug member (14) to bring the second plug member (14) into contact the workpiece (16) and into contact with the transition section (26) of the first plug member (12), the first axial force being opposite to the second axial force;
rotating at least the first plug member (12) about the first axis (24) to provide friction between the first plug member (12) and the workpiece (16).

2. The method of friction welding according to claim 1, comprising locating the main body (20) of the first plug member (12) in a recess of the second plug member (14) such that the first and second axes are aligned.

3. The method of friction welding according to claim 1 or 2, comprising rotating both the first and second plug members (12, 14) about the respective first and second axes.

4. The method of friction welding according to claim 3, comprising rotating the first plug member (12) in an opposite direction to the second plug member (14).

5. The method of friction welding according to any preceding claim, wherein the main body (20) is in the form of a cylindrical shaft, and the second plug member (14) is in the form of a cylindrical sleeve.

6. The method of friction welding according to claim 5, wherein the diameter of the main body (20) is less than an inner diameter of the cylindrical sleeve.

7. The method of friction welding according to any preceding claim, comprising rotating the second plug member (14) about the second axis to provide friction between the second plug member (14), the first plug member (12) and/or the workpiece (16).

8. The method of friction welding according to any preceding claim, comprising creating a friction weld between the first plug member (12) and the second plug member (14), preferably between the transition section (26) of the first plug member (12) and the second plug member (14).

9. The method of friction welding according to any preceding claim, comprising creating a friction weld between the first plug member (12) and the workpiece (16), preferably between the transition section (26) of the first plug member (12) and the workpiece (16).

10. The method of friction welding according to any preceding claim, comprising applying the second axial force to the second plug member (14) to bring the second plug member (14) into contact with a second surface of the workpiece (16), and the transition section (26) of the first plug member (12) into contact with a surface of the aperture (18) in the workpiece (16).

11. The method of friction welding according to any preceding claim, comprising applying the first and second axial forces at the same time as rotating at least one of the first plug member (12) and the second plug member (14).

12. Apparatus for providing a friction weld, comprising:
a first plug member (12) configurable to be positioned in an aperture (18) in a workpiece (16), the first plug member (12) comprising a main body (20), a plug (22) and a transition section (26) located between the plug (22) and the main body (20), and a first axis (24);
a second plug member (14) comprising a second axis, and being positionable relative to the first plug member (12) and a workpiece (16) so as to be in contact with the workpiece (16) and the transition section (26) of the first plug member (12);
wherein at least one of the first plug member (12) and the second plug member (14) is configurable to be rotated relative to a workpiece (16) so as to produce a friction weld between the first plug member (12) and the workpiece (16),
preferably between the first and and second plug members (12, 14), and between the first plug member (14) and the workpiece (16).

13. The apparatus for providing a friction weld of claim 12, wherein the main body (20) of the first plug member (12) is a cylindrical shaft comprising a shaft diameter, the plug (22) comprises a substantially cylindrical form having a plug diameter that is greater than the shaft diameter, and the transition section (26) is substantially frustoconical in shape, comprising a minimum diameter that is equal to the shaft diameter, and comprising a maximum diameter that is equal to the plug diameter.

14. The apparatus for providing a friction weld of claim 12 or 13, wherein the first plug member (12) is configurable to be rotated so as to produce a friction weld between the first plug member (12) and the workpiece (16).

15. The apparatus for providing a friction weld of any of claims 12 to 14, wherein the first plug member (12) and the second plug member (14) comprise the same material.
